# EUROPÄISCHE PATENTSCHRIFT

(11) **EP 3 208 636 B1**
(45) Veröffentlichungstag und Bekanntmachung des Hinweises auf die Patenterteilung: **24.01.2018**
(21) Anmeldenummer: 16156523.9
(22) Anmeldetag: 19.02.2016
(51) Int. Cl.: G01S 17/42, G01S 7/481

(54) **OPTOELEKTRONISCHER SENSOR UND VERFAHREN ZUM ERFASSEN VON OBJEKTEN**
OPTOELECTRONIC SENSOR AND METHOD FOR DETECTING OBJECTS
CAPTEUR OPTOÉLECTRONIQUE ET PROCÉDÉ DESTINÉ À LA SAISIE D'OBJETS

(43) Veröffentlichungstag der Anmeldung: 23.08.2017
(73) Patentinhaber: SICK AG, 79183 Waldkirch (DE)
(72) Erfinder: Werber, Armin, 79331 Teningen (DE); Baldischweiler, Boris, 79194 Gundelfingen (DE)

(56) Entgegenhaltungen:
- EP-A1- 1 942 354
- EP-A1- 2 833 161
- EP-A2- 1 480 009
- DE-A1- 10 041 182
- FR-A1- 2 772 135

## Beschreibung

Die Erfindung betrifft einen optoelektronischen Sensor, insbesondere Laserscanner, und ein Verfahren zum Erfassen von Objekten nach dem Oberbegriff von Anspruch 1 beziehungsweise 12.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Laserscanner werden nicht nur für allgemeine Messaufgaben, sondern auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

Sicherheitslaserscanner müssen besonders zuverlässig arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe.

Eine auch in DE 43 40 756 A1 beschriebene Möglichkeit zur Funktionsüberprüfung ist die Verwendung eines internen Referenzzielsystems, mit dessen Hilfe die fehlerfreie Abstandsmessung und deren unbeeinträchtigte Empfindlichkeit überprüft werden. Das Referenzziel wird in jedem Umlauf der Ablenkeinheit optisch angetastet und das Signalecho im Hinblick auf Signalstärke und Abstandswert ausgewertet. Es ist üblich, einen zusammenhängenden Winkelbereich exklusiv für die Referenzzielmessung zu verwenden. In diesem Winkelbereich befindet sich auch der Träger, an dem die Ablenkeinheit mit Motor, Drehspiegel und Winkelencoder aufgehängt ist. Dadurch wird der Sichtbereich gegenüber den an sich möglichen 360° eingeschränkt. Da die Abtastung des internen Referenzziels auf Remission an einem Lambert'schen Strahler basiert, ergeben sich Probleme mit Streulicht und Langzeitstabilität. Schon geringfügige Änderungen im optischen Pfad haben starken Einfluss auf das Referenzzielsignal. Selbst leichte Farbunterschiede von elektronischen Leiterkarten können das Streulichtverhalten massiv beeinflussen.

In den herkömmlichen Laserscannern sind alle optischen Elemente zur Strahlformung und Strahlführung des rotierenden Abtaststrahls und alle elektronischen Elemente, wie die Sende- und Empfangselektronik, vollständige Mess- und Auswertungselektronik sowie Schnittstellen und Versorgung, in einem Gehäuse integriert. Elektrische Anschlussleitungen stellen dem Gerät die Versorgungsspannung bereit und ermöglichen den Austausch von Ein- und Ausgangssignalen. Wegen steigender Anforderungen an Messverfahren und Ausstattung, etwa zur Integration in Netzwerke, nimmt der Anteil der Elektronik im Gehäuse des Laserscanners ständig zu. Das steht einer Miniaturisierung im Weg, die in vielen Anwendungsfeldern, etwa bei autonomen Fahrzeugen, mit steigender Integrationsdichte gefordert wird. Außerdem führt es zu negativen Effekten wie zusätzlicher Leistungsaufnahme und Abwärme, und mehr Elektronik erhöht auch die Empfindlichkeit auf elektromagnetische Störeinkopplungen sowie umgekehrt die elektromagnetische Abstrahlung.

Aus der DE 199 28 958 A1 ist ein Laserscanner bekannt, bei dem ein Sende- und ein Empfangslichtwellenleiter in einer kugelförmigen Linse untergebracht sind, die durch einen Motor zum Rotieren gebracht wird. Das ist eine Alternative zu dem sonst üblichen Drehspiegel, löst aber keines der angesprochenen Probleme mit dem Referenzziel und dem wachsenden Anteil von Elektronikkomponenten. Das gilt sinngemäß genauso für einen Laserscanner nach EP 2 645 125 A1, in dem ebenfalls in Drehbewegung versetzte Sende- und Empfangslichtleiter für die periodische Ablenkung des Abtaststrahls sorgen.

In der EP 1 411 371 A1 wird das Licht innerhalb des Laserscanners mit Lichtleitern geführt, damit beide Seiten des Drehspiegels für eine Abtastung genutzt werden können. So kann eine Distanzmessung mit einer Bildaufnahme kombiniert werden, was aber den Bedarf an Elektronik im selben Gehäuse insgesamt nur weiter erhöht. Auch die US 2010/0253931 A1 kombiniert in einem rotierenden System eine Reihe von Erfassungen, wie Entfernungsmessung, eine Zoom- und eine Überblickskamera, und nutzt intern Lichtwellenleiter zur Lichtverteilung.

Die WO 03/062744 offenbart eine laserbasierte Messvorrichtung, in der das Licht mehrerer Laserlichtquellen mittels Lichtleitern in einer starren Struktur zusammengeführt wird. Die starre Struktur kann in zwei Achsen verdreht werden, damit das aus dem Lichtleiter austretende Licht auf einen Retroreflektor ausgerichtet werden kann. Dabei werden die Lichtleiter verdrillt, so dass diese Konstruktion für einen Laserscanner völlig ungeeignet wäre.

Die EP 2 833 161 A1 offenbart eine optoelektronische Messvorrichtung für ein Kraftfahrzeug mit wenigstens einer abtastenden optoelektronischen Detektionseinrichtung. Deren optische Elemente sind in zwei Scansensoren untergebracht, die baulich von den elektronischen Elementen einschließlich Lichtsender und Lichtempfänger getrennt und damit durch optische Leiter verbunden sind.

In der EP 1 480 009 A2 wird eine Lasermessvorrichtung beschrieben, die ein Hauptgehäuse mit mehreren durch Strahlteilerspiegel verkoppelten Lichtsender-/Lichtempfängereinheiten und ein Zusatzgehäuse mit einem Drehspiegel aufweist. In einer Ausführungsform sind Haupt- und Zusatzgehäuse durch einen Lichtleiter verbunden.

Aus der EP 1 942 354 A1 ist eine Überwachungsvorrichtung bekannt, in der das Sende- und Empfangslicht über jeweilige Lichtleiter auf einen Drehspiegel geführt wird. Zudem wird über Teilerspiegel und einen Referenzlichtwellenleiter ein Teil des Sendelichts direkt nach der Sendeoptik auf die Empfangsoptik geführt, um ein Referenzsignal für die Auswertung zu gewinnen.

In einer optoelektronischen Vorrichtung gemäß DE 100 41 182 A1, die wie ein Laserscanner aufgebaut ist, wird an einer Referenzposition ein Referenzobjekt angeordnet. Dabei handelt es sich um eine Lichtleitfaser, die zu einer Spule aufgerollt und die mit einem Reflektor abgeschlossen ist. Befindet sich folglich die optoelektronische Vorrichtung in einer Drehstellung, die dem Referenzobjekt entspricht, so nimmt das Sendelicht den Weg zu einem Drehspiegel, in die Lichtleitfaser, wird an dessen Ende reflektiert und gelangt dann erneut über den Drehspiegel zu einem Lichtempfänger. Die Länge der Lichtleitfaser ist auf die maximale Reichweite abgestimmt, so dass das davon erzeugte Referenzsignal einem Messsignal aus maximaler Messentfernung entspricht und damit die Entfernungsmessung getestet werden kann.

Es ist daher Aufgabe der Erfindung, einen Sensor anzugeben, der die genannten Nachteile einer komplexen Elektronik überwindet.

Diese Aufgabe wird durch einen optoelektronischen Sensor und ein Verfahren zum Erfassen von Objekten nach Anspruch 1 beziehungsweise 12 gelöst. Dabei geht die Erfindung von dem Grundgedanken aus, die optischen und elektronischen Bauteile des Sensors voneinander zu entkoppeln. Dazu ist ein Optikmodul vorgesehen, welches die bewegliche Ablenkeinheit enthält, und ein davon separiertes Elektronikmodul mit Lichtsender, Lichtempfänger und den zugehörigen elektronischen Komponenten wie der Auswertungseinheit. Lichtwellenleiter sorgen für die Verbindung der beiden Module. Dabei gilt die Trennung in die beiden Module vorzugsweise für Sende- und Empfangspfad. Es gibt Beispiele, in denen nur der Lichtsender oder nur der Lichtempfänger in dem Elektronikmodul ausgelagert ist und dementsprechend nur ein Sendelichtwellenleiter oder ein Empfangslichtwellenleiter vorhanden ist.

Das Optikmodul kann als eine Art passiver Laserscanner verstanden werden, in dem lediglich die bewegliche Ablenkeinheit verbleibt, die mit dem Licht aus dem Elektronikmodul den Überwachungsbereich abtastet. Die aktive und hochempfindliche Sende- und Empfangselektronik, die Messwert- und Signalauswertung sowie die Schnittstellen nach außen dagegen sind in das separate Elektronikmodul ausgelagert.

Die Erfindung hat den Vorteil, dass optische Abtastung und Elektronik nahezu vollständig voneinander entkoppelt sind. Es lassen sich so völlig neue Scannerverbund- und Systemkonzepte verwirklichen. Das Optikmodul, der eigentliche Laserscanner, kann eine herkömmlich gar nicht denkbare Miniaturisierung erfahren, da lediglich die Anschlüsse für eine Spannungsversorgung zum Bewegen der Ablenkeinheit und für die Lichtwellenleiter benötigt werden. Die Komplexität der Elektronik spielt für die Baugröße des Optikmoduls keine Rolle. Aus der Trennung ergibt sich auch eine erhöhte Robustheit gegenüber intrinsischen und extrinsischen Störgrößen (EMV). Es werden sogar Anwendungen erschlossen, die für Laserscanner bislang wegen starker elektromagnetischer Strahlung, Explosionsgefährdung oder auch im Außenbereich (outdoor) gar nicht zugänglich waren.

Das Optikmodul weist bevorzugt einen Antrieb für Bewegung der Ablenkeinheit sowie eine Sendeoptik, um den Abtaststrahl aus dem Sendelichtwellenleiter in den Überwachungsbereich auszusenden, und/oder eine Empfangsoptik auf, um den remittierten Abtaststrahl in den Empfangslichtwellenleiter einzukoppeln. Das Optikmodul bleibt trotz des Antriebs aus Sicht der Signalerzeugung, -erfassung und -verarbeitung passiv. Denkbar ist aber noch ein Encoder für den Antrieb, der die tatsächliche Winkelstellung erfasst. Dessen Signale sind dann für die Objekterfassung relevant, denn sie bestimmen den jeweiligen Erfassungswinkel, aber weiterhin sind es keine eigentlichen Messsignale aus dem Überwachungsbereich selbst.

Das Optikmodul und/oder das Elektronikmodul weist bevorzugt ein eigenes Gehäuse auf. Eigene Gehäuse unterstreichen die Trennung der beiden Module. Herkömmlich ist immer ein gemeinsames Gehäuse für den gesamten Laserscanner vorgesehen. Dagegen handelt es sich bei den erfindungsgemäßen Modulen eigentlich um jeweils eigene Geräte, die über Lichtwellenleiter in Verbindung stehen und gemeinsam Objekte in dem Überwachungsbereich erfassen.

Optikmodul und Elektronikmodul sind bevorzugt voneinander räumlich getrennt. Die beiden Module sind demnach klar voneinander beabstandet und nicht direkt beieinander angeordnet. Da in den Lichtwellenleitern nur ganz geringe Verluste entstehen, kann der Abstand durchaus groß sein, von einigen Metern bis zu Größenordnungen von hundert Metern.

Sendelichtwellenleiter und Empfangslichtwellenleiter sind bevorzugt von einem gemeinsamen Lichtwellenleiter gebildet. Dazu werden beispielsweise die beiden Lichtwellenleiter mit einem Y-Koppler verbunden. Es verbleibt nur eine kurze separate Strecke für Sende- und Empfangslicht bei dem Elektronikmodul zum Anschluss an Lichtsender und Lichtempfänger. Eine weitere Auftrennung bei dem Optikmodul ist denkbar. Zum Überwinden der Hauptdistanz zwischen Optikmodul und Elektronik genügt der gemeinsame Lichtwellenleiter. Es führt ein Referenzlichtwellenleiter zumindest einen Teil des Sendesignals als Referenzsignal dem Lichtempfänger zu, und die Auswertungseinheit ist für eine Referenzmessung anhand des Referenzsignals ausgebildet. Damit kann, insbesondere in sicherheitstechnischen Anwendungen, zumindest der Lichtsender und je nach Anordnung auch die Optik und Auswertung auf Funktionsfähigkeit getestet werden. Der Referenzlichtwellenleiter wird beispielsweise mit einem Y-Koppler in den Empfangslichtwellenleiter eingekoppelt und nutzt diesen so mit. Der Referenzlichtwellenleiter ist bevorzugt als optischer Teilkurzschluss von Sendepfad und Empfangspfad zwischen Optikmodul und Elektronikmodul angeordnet. Der Referenzlichtwellenleiter führt hier direkt einen Teil des Sendelichts als Referenzsignal zum Lichtempfänger. Dazu kann der Referenzlichtwellenleiter beispielsweise mit jeweils einem Y-Koppler an Sende- und Empfangslichtwellenleiter angeschlossen werden. Es wird durch Wahl entsprechender Eigenschaften der Y-Koppler und des Referenzlichtwellenleiters nur ein kleiner Anteil des Sendelichts durch den Referenzlichtwellenleiter geleitet, etwa 5%, damit der größte Teil für die Messung verfügbar bleibt. Außerdem kann dieser Anteil der Pegel des Referenzsignals eingestellt werden. Im Gegensatz zu dem sonst üblichen internen Referenzziel im Abtaststrahl erzeugt der optische Teilkurzschluss kein Streulicht und keinen Totbereich, erlaubt also einen Scanbereich des Laserscanners über volle 360°. Der Eintrittsbereich des Referenzlichtwellenleiters ist in dem Optikmodul angeordnet, insbesondere in einem Austrittsbereich des Abtaststrahls. Der Referenzlichtwellenleiter befindet sich dann dort, wo üblicherweise das interne Referenzziel untergebracht ist. Auf diese Weise wird nicht nur der Lichtsender getestet, sondern es können auch die optischen Elemente des Optikmoduls sowie die Auswertung einschließlich einer Bestimmung der Lichtlaufzeit überprüft werden. Der Eingangsbereich des Referenzlichtwellenleiters im Optikmodul erzeugt einen gewissen Totbereich, der aber deutlich kleiner bleiben kann als bei einem internen Referenzziel. Außerdem entfällt die Streulichtempfindlichkeit, und die Pegel des Referenzsignals sind durch Lichteinfang und Eigenschaften des Referenzlichtwellenleiters einstellbar.

Die Auswertungseinheit ist bevorzugt dafür ausgebildet, anhand des Referenzsignals eine Vorhersage für das Empfangssignal zu bestimmen und durch Vergleich zwischen Vorhersage und tatsächlichem Empfangssignal Störungen zu erkennen. Die Form des Sendesignals unterliegt unvermeidbaren Veränderungen. Mit Hilfe des Referenzsignals kann nun vorhergesagt werden, wie sich das auf das eigentliche Empfangssignal auswirkt. Ändert sich das Empfangssignal, so soll eine Störerkennung unterscheiden, ob dies einer Störung geschuldet ist oder ob ein neues Ziel angetastet wurde. Der Effekt der Schwankungen des Sendesignals in dieser Störerkennung kann anhand des Referenzsignals berücksichtigt werden.

Das Optikmodul weist beispielsweise eine Solarzelle zur eigenen Energieversorgung auf, wobei die Solarzelle durch den Sendelichtwellenleiter oder den Empfangslichtwellenleiter gespeist wird. Dann ist am Optikmodul gar kein Anschluss außer den Lichtwellenleitern mehr erforderlich. Gedanklich liegt es näher, den Sendelichtwellenleiter zu verwenden, aber der Empfangswellenleiter ist ebenfalls denkbar, sofern nicht ohnehin ein gemeinsamer Lichtwellenleiter vorgesehen ist. Das für die Solarzelle eingespeiste Licht stammt vorzugsweise von einer dedizierten Lichtquelle mit ausreichender Leistung und passendem Spektrum.

Die Auswertungseinheit ist bevorzugt dafür ausgebildet, zwischen Optikmodul und Elektronikmodul über den Sendelichtwellenleiter und/oder den Empfangslichtwellenleiter Daten auszutauschen. Solche Daten können in beide Richtungen relevant sein, etwa als Steuerbefehle an das Optikmodul, wie zur Einstellung der Drehzahl der beweglichen Ablenkeinheit, oder Informationen von dem Optikmodul, wie Encoderinformationen über die tatsächliche Winkelstellung, und sie werden beispielsweise auf die übrigen Lichtsignale aufmoduliert.

Das Elektronikmodul weist bevorzugt mehr als einen Lichtsender und/oder Lichtempfänger und mehrere Anschlüsse für Lichtwellenleiter auf. Dadurch kann das Elektronikmodul an mehrere Sendelichtwellenleiter und/oder mehrere Empfangslichtwellenleiter angeschlossen werden. Die mehreren Lichtsender beziehungsweise Lichtempfänger können als Matrix- oder Zeilenanordnung in einem Bauteil oder auf einem Chip realisiert sein.

Die Auswertungseinheit ist bevorzugt für eine parallele oder sequentielle Ansteuerung mehrerer Lichtsender und Auswertung mehrerer Lichtempfänger ausgebildet. Damit kann die Auswertungseinheit in mehreren Kanälen gleichzeitig messen, oder alternativ beispielsweise durch Multiplexing mit nur einem Kanal nacheinander Messungen mit verschiedenen Lichtsendern und/oder Lichtempfängern durchführen.

An das Elektronikmodul sind bevorzugt mehrere Optikmodule über Lichtwellenleiter angeschlossen. Obwohl heterogene Anschlüsse mit teilweise nur über Sendelichtwellenleiter oder nur über Empfangslichtwellenleiter angeschlossenen Optikmodulen denkbar sind, ist die bevorzugte Ausführungsform der Anschluss mehrerer Optikmodule über jeweils ein Paar aus einem Sendelichtwellenleiter und einem Empfangslichtwellenleiter oder einem gemeinsamen Lichtwellenleiter, der beide Aufgaben erfüllt. Das Ergebnis sind mehrere passive Laserscanner, nämlich die Optikmodule, die sich eine Elektronik teilen und so den apparativen Aufwand ganz erheblich reduzieren. Die Optikmodule können beträchtlichen räumlichen Abstand zueinander und zu dem gemeinsamen Elektronikmodul haben. Dadurch können mit nur einem Elektronikmodul mehrere Orte überwacht werden, oder ein Ort in unterschiedlichen Perspektiven. Die gemeinsame Installation, Konfiguration, Steuerung und Auswertung eines Verbundes von Laserscannern wird dabei erheblich erleichtert.

Der Sensor ist vorzugsweise als Entfernungsmesser ausgebildet, indem die Auswertungseinheit die Lichtlaufzeit zwischen Aussenden und Empfang des Abtaststrahls und daraus die Entfernung eines Objekts bestimmt. Zudem ist vorzugsweise in dem Optikmodul eine Winkelmesseinheit zur Erfassung der Winkelstellung der Ablenkeinheit vorgesehen. Über die Entfernungs- und Winkelmessungen stehen vollständige zweidimensionale Polarkoordinaten zur Verfügung.

Der Sensor ist vorzugsweise als Sicherheitslaserscanner ausgebildet und weist einen Sicherheitsausgang (OSSD, Output Signal Switching Device) auf, wobei die Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Der Sensor kann so wie einleitend beschrieben in sicherheitstechnischen Anwendungen eingesetzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Laserscanners mit einem Optikmodul und einem davon separierten Elektronikmodul;
- Fig. 2: eine schematische Darstellung eines Laserscanners, bei dem Sendelichtwellenleiter und Empfangslichtwellenleiter kombiniert sind;
- Fig. 3: eine schematische Darstellung eines Laserscanners mit Versorgung des Optikmoduls durch eine Solarzelle und zugeführtem Versorgungslicht;
- Fig. 4: eine schematische Darstellung eines Laserscanners mit optischem Teilkurzschluss zur Referenzmessung;
- Fig. 5: eine schematische Darstellung einer Ausführungsform eines Laserscanners mit einem Referenzlichtwellenleiter in dem Optikmodul; und
- Fig. 6: eine schematische Darstellung eines Laserscanners, bei dem mehrere Optikmodule an dasselbe Elektronikmodul angeschlossen sind.

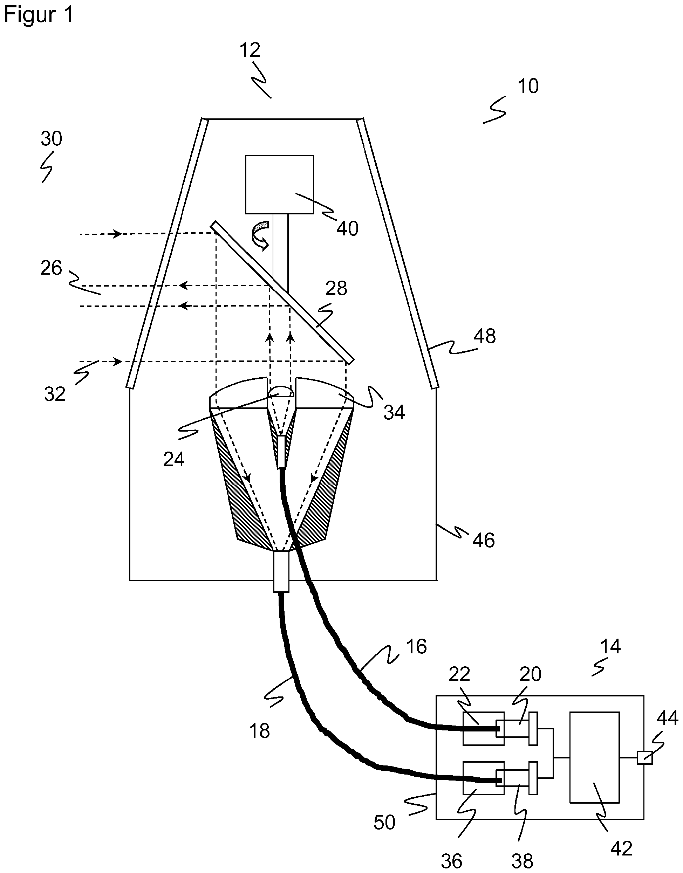

Fig. 1 zeigt eine schematische Schnittdarstellung durch einen Laserscanner 10, der nicht in den Schutzbereich der Ansprüche fällt. Der Laserscanner 10 ist in ein Optikmodul 12 und ein Elektronikmodul 14 unterteilt. Dabei enthält das Optikmodul 12 nach Möglichkeit nur passive optische Komponenten, und sämtliche elektronischen Komponenten sind in das separate Elektronikmodul 14 ausgelagert. Diese Aufteilung wird konzeptionell auch nicht dadurch aufgebrochen, dass in dem Optikmodul 12 elektrisch eine Bewegung erzeugt wird, da dies mit der Signalerzeugung, Signalerfassung und Signalauswertung nichts zu tun hat. Die Verbindung zwischen Optikmodul 12 und Elektronikmodul 14 erfolgt durch einen Sendelichtwellenleiter 16 und einen Empfangslichtwellenleiter 18, die beispielsweise als Glasfaserleiter oder Multimodeglasfaserleiter ausgebildet sind.

Das Sendelicht eines Lichtsenders 20 in dem Elektronikmodul 14, beispielsweise mit einer Laserlichtquelle, wird über einen sendeseitigen Chip-Faserkoppler 22 in den Sendelichtleiter 16 eingekoppelt und tritt an der anderen Seite in dem Optikmodul 12 wieder aus. In dem Optikmodul 12 wird aus dem Sendelicht mittels einer Sendeoptik 24 ein Sendelichtstrahl 26 geformt, der an einer beweglichen Ablenkeinheit 28 in einen Überwachungsbereich 30 umgelenkt wird. Fällt der Sendelichtstrahl 26 in dem Überwachungsbereich 30 auf ein Objekt, so gelangt remittiertes Licht 32 wieder zu dem Optikmodul 12 zurück und wird erneut von der Ablenkeinheit 28 umgelenkt. Eine Empfangsoptik 34 bündelt das remittierte Licht 32 in den Empfangslichtwellenleiter 18, das auf diese Weise aus dem Optikmodul 12 zu dem Elektronikmodul 14 geleitet wird. Dort fällt es mittels eines empfangsseitigen Chip-Faserkopplers 36 auf einen Lichtempfänger 38, beispielsweise eine Photodiode oder eine APD (Avalanche Photo Diode).

Die Ablenkeinheit 28 ist in dieser Ausführungsform als Drehspiegel ausgestaltet, die durch Antrieb eines Motors 40 kontinuierlich rotiert. Dazu kann das Optikmodul 12 einen eigenen, nicht dargestellten Versorgungsanschluss aufweisen. Der Sendelichtstrahl 26 überstreicht somit den durch die Rotationsbewegung erzeugten Überwachungsbereich 30. Die konkrete Ausgestaltung des Optikmoduls 12 ist nur beispielhaft zu verstehen, es können auch andere an sich bekannte Konzepte verwirklicht sein. So ist es anstelle eines Drehspiegels auch möglich, die Ablenkeinheit 28 als rotierende Lichtleiter auszugestalten, wie dies beispielsweise in der einleitend genannten EP 2 645 125 A1 erläutert ist. Die Gestaltung und Anordnung von Sendeoptik 24 und Empfangsoptik 34 kann ebenfalls variiert werden, etwa über einen strahlformenden Spiegel als Ablenkeinheit 28, eine andere Anordnung der Linsen, beispielsweise nebeneinander, oder zusätzliche Linsen.

Eine Auswertungseinheit 42 ist mit dem Lichtsender 20 und dem Lichtempfänger 38 verbunden, um das Sendemuster vorzugeben und das von dem Lichtempfänger 38 erzeugte Empfangssignal auszuwerten. Dabei wird vorzugsweise die Lichtlaufzeit von Aussenden eines Lichtsignals bis zu dessen Empfang nach Reflexion an dem Objekt in dem Überwachungsbereich 30 ermittelt und unter Verwendung der Lichtgeschwindigkeit auf die Entfernung des Objektes von dem Laserscanner 10 geschlossen. Zudem kann in dem Optikmodul 12 ein nicht dargestellter Encoder die tatsächliche Winkelstellung der Ablenkeinheit 28 bestimmen, die dann beispielsweise optisch über den Empfangslichtwellenleiter 18 an die Auswertungseinheit 42 übertragen wird. Somit stehen über den Winkel und die Entfernung zweidimensionale Polarkoordinaten aller Objekte in dem Überwachungsbereich 30 zur Verfügung.

In sicherheitstechnischer Anwendung prüft die Auswertungseinheit 42 vorzugsweise, ob ein unzulässiges Objekt in einen innerhalb des Überwachungsbereichs 30 festgelegten Schutzbereich eingreift. Ist das der Fall, wird über einen Sicherheitsausgang 44 (OSSD, Output Signal Switching Device) ein Absicherungssignal an eine überwachte Gefahrenquelle, beispielsweise eine Maschine ausgegeben. Der Laserscanner 10 ist in derartigen sicherheitstechnischen Anwendungen durch Maßnahmen entsprechend der einleitend genannten Normen ein sicherer Laserscanner. In anderen Ausführungsformen sind anstelle des Sicherheitsausgangs 44 oder zusätzlich dazu Schnittstellen zur Ausgabe von Messdaten oder beispielsweise zum Parametrieren des Laserscanners 10 vorgesehen.

Das Optikmodul 12 ist vorzugsweise in einem eigenen Gehäuse 46 untergebracht, das im Bereich des Lichtaus- und Lichteintritts eine umlaufende Frontscheibe 48 aufweist. Ebenso weist das Elektronikmodul 14 vorzugsweise ein eigenes Gehäuse 50 auf.

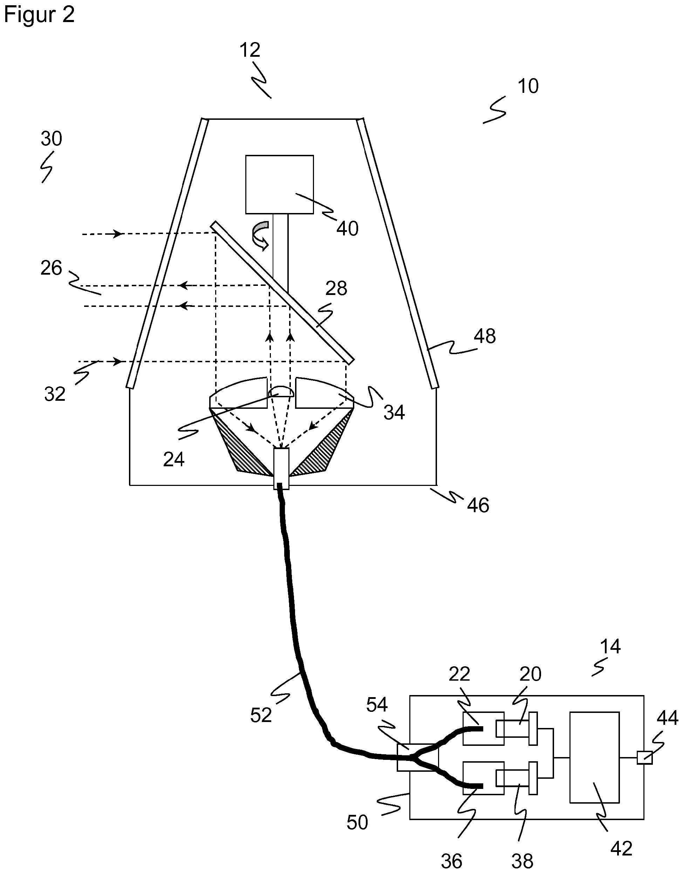

Figur 2 zeigt ein weiteres Beispiel eines Laserscanners 10. Dabei bezeichnen in der gesamten Beschreibung gleiche Bezugszeichen die gleichen oder einander entsprechenden Merkmale und werden nicht erneut erläutert. Im Unterschied zu der in Figur 1 dargestellten Ausführungsform sind hier Sendelichtwellenleiter 16 und Empfangslichtwellenleiter 18 in einem gemeinsamen Lichtwellenleiter 52 zusammengefasst. Eine Aufteilung in Sende- und Empfangspfad erfolgt erst in oder an dem Elektronikmodul 14 mit Hilfe eines Y-Kopplers 54. In dem Optikmodul 12 gibt es nun einen einzigen gemeinsamen Aus- und Eintrittsbereich des Lichts. Das ist ein Vorteil gegenüber herkömmlichen Laserscannern, in denen immer zwei Strahlengänge erforderlich sind, weil sich dort Sender und Empfänger an verschiedenen Orten befinden. Hier kann die Sende- und Empfangsoptik 24, 34 erheblich kleiner gestaltet werden, auch wenn die schematische Figur 2 das nicht wiedergibt. Trotzdem wäre alternativ auch denkbar, den Sende- und Empfangsbereich mit einem weiteren Y-Koppler zu trennen.

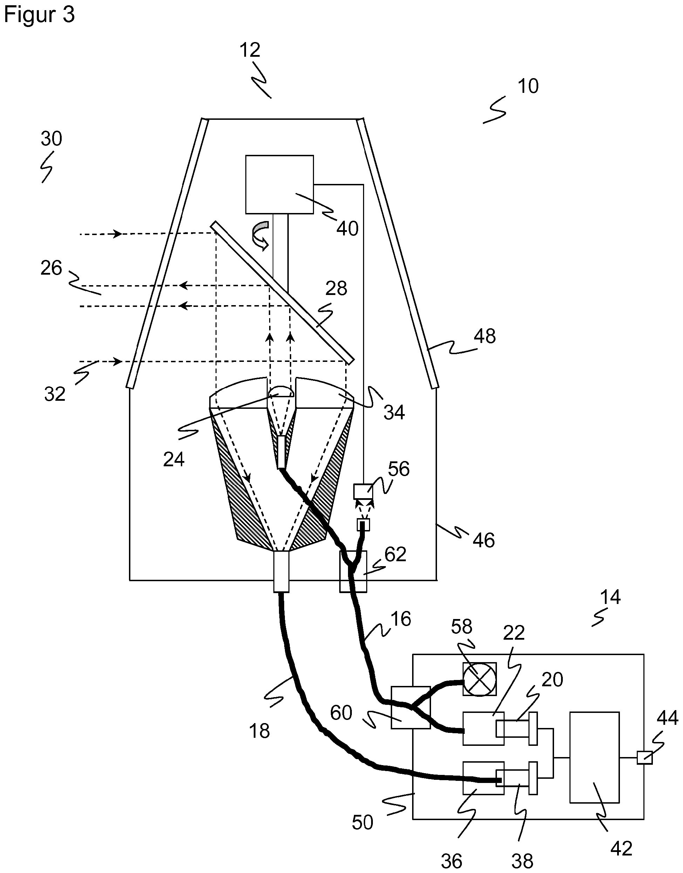

Figur 3 zeigt ein weiteres Beispiel eines Laserscanners 10 mit Versorgung des Optikmoduls 12 über den Sendelichtwellenleiter 16. Eine externe eigene Versorgung des Optikmoduls 12 kann dann entfallen. Dazu ist in dem Optikmodul 12 eine Solarzelle 56 angeordnet, die den Motor 40 und etwaige weitere Komponenten des Optikmoduls 12 versorgt, wie einen Encoder zur Bestimmung der Drehstellung der Ablenkeinheit 28. Diese Solarzelle 56 wird nun vorzugsweise nicht etwa vom Umgebungslicht gespeist, sondern gezielt von dem Elektronikmodul 14. Dort wird in Leistung und Spektrum für die Solarzelle 56 geeignetes Licht einer Lichtquelle 58 über einen Y-Koppler 60 in den Sendelichtwellenleiter 16 eingekoppelt. Entsprechend wird in dem Optikmodul mit einem Y-Koppler 62 das Licht für die Solarzelle 56 wieder ausgekoppelt. Durch entsprechende Auslegung der Y-Koppler 60, 62 wird das Sendesignal dabei durch die Überlagerung nicht beeinträchtigt. Für die Solarzelle 56 ist Gleichlicht geeignet. Dem kann noch eine Modulation hinzugefügt werden, um Daten an das Optikmodul 12 zu senden, beispielsweise Pulse zur Einstellung der Drehzahl der Ablenkeinheit 28. Alternativ zu dem Sendelichtwellenleiter 16 kann in ganz analoger Weise auch der Empfangslichtwellenleiter 18 genutzt werden, oder es findet wie in Figur 2 ohnehin nur ein einziger gemeinsamer Lichtwellenleiter 52 Verwendung.

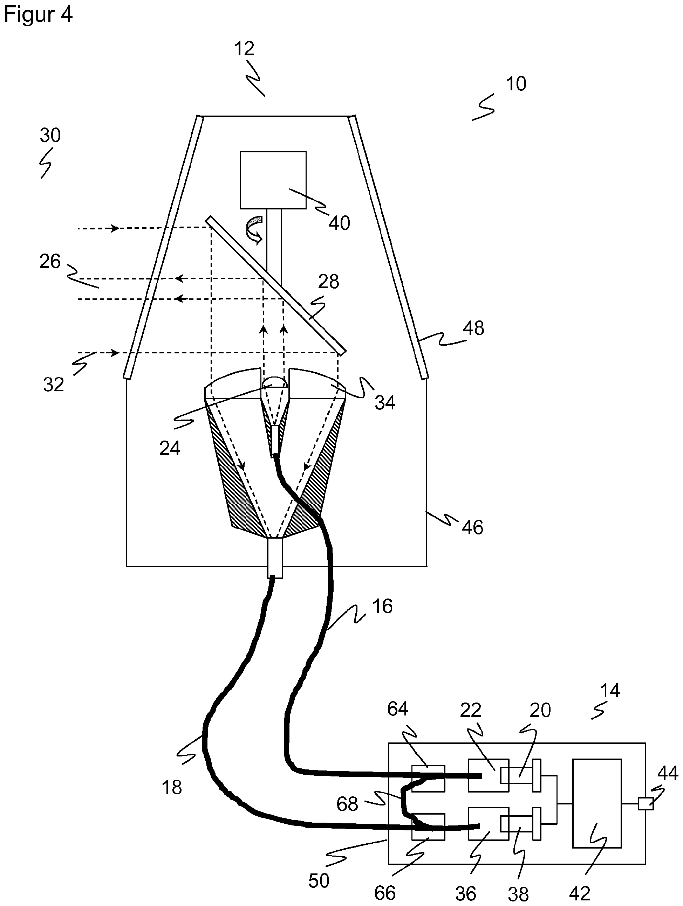

Figur 4 zeigt ein weiteres Beispiel eines Laserscanners 10 mit einer Referenzmessung durch optischen Teilkurzschluss. Mittels zweier Y-Koppler 64, 66 wird ein Referenzlichtwellenleiter 68 zwischen Sendelichtwellenleiter 16 und Empfangslichtwellenleiter 18 eingefügt, der einen Teil des Sendelichts direkt, ohne den Weg über das Optikmodul 12 oder den Überwachungsbereich 30, von dem Lichtsender 20 zu dem Lichtempfänger 38 umleitet. Dabei wird nur ein kleiner Teil des Sendelichts abgezweigt, beispielsweise 5%, damit der Großteil weiterhin für die Messung verfügbar ist.

Die Auswertungseinheit 42 erhält auf diese Weise ein Referenzsignal, an dem sie zunächst die Funktion von Lichtsender 20 und Lichtempfänger 38 testen kann. Der Pegel ist durch Auslegung etwa der Faserquerschnitte von Y-Koppler 64, 66 und Referenzlichtwellenleiters 68 beispielsweise so eingestellt, dass dies einem herkömmlichen internen Referenzziel mit geringer Remission entspricht. Die Referenzmessung kann außerdem zum Nachführen der eigentlichen Entfernungsmessung verwendet werden, da die Leitungslänge der Referenzstrecke durch Kalibration oder Parametrierung bekannt ist.

Mit dieser Referenzmessung werden die Komponenten des Optikmoduls 12 nicht getestet. Das ist aber auch herkömmlich nicht Aufgabe der Referenzzielmessung, denn ein Test des Optikmoduls 12 entspricht praktisch einer sonst üblichen Frontscheibenüberwachung, die ebenfalls zusätzlich vorhanden wäre. Die Verschmutzung des Übergangs Lichtwellenleiter 16, 18, 52 auf Optikmodul 12 kann beispielsweise durch den Rückreflex geprüft werden.

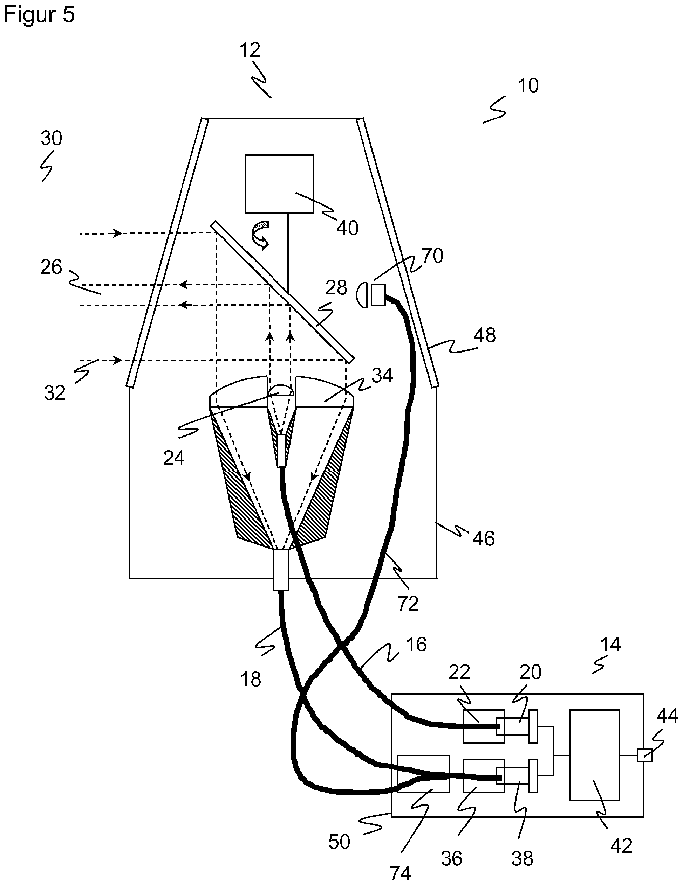

Figur 5 zeigt eine erfindungsgemäße Ausführungsform des Laserscanners 10 mit einer Referenzmessung mittels zusätzlichem optischen Referenzziel 70 anstelle eines optischen Teilkurzschlusses. Prinzipiell können beide Referenzmessungen auch zugleich erfolgen. Das Referenzziel 70 ist wie herkömmlich das interne Referenzziel in einem rückwärtigen Scanbereich des Optikmoduls 12 angeordnet, d.h. bei einer Winkelstellung der Ablenkeinheit 28, in der keine Überwachung erfolgt. Wenn sich die Ablenkeinheit 28 in diese Winkelstellung dreht, wird das Sendelicht durch das Referenzziel 70 in einen Referenzlichtleiter 72 eingekoppelt. Der Referenzlichtleiter 72 wiederum koppelt mittels eines Y-Kopplers 74 in den Empfangslichtleiter 18. So entsteht ein Referenzsignal, mit dem der komplette optische Pfad von Lichtsender 20 über Sendelichtwellenleiter 16, Sendeoptik 24, Ablenkeinheit 28 bis hin zum Lichtempfänger 38 getestet werden kann.

Der Y-Koppler ist in Figur 5 in dem Elektronikmodul 14 angeordnet, könnte sich aber auch weiter vorne bis in das Elektronikmodul 14 hinein befinden. Außerdem ist wie in allen Ausführungsformen denkbar, dass ein gemeinsamer Lichtleiter 52 anstelle von Sendelichtwellenleiter 16 und Empfangslichtwellenleiter 18 vorgesehen ist.

Das Referenzsignal entsteht also ohne Remission, so dass es in seinem Pegel nicht von Remissionseigenschaften abhängt und auch kein Streulicht erzeugt. Das Referenzziel 70 beansprucht einen deutlich kleineren Winkelbereich als ein herkömmliches internes Referenzziel und ermöglicht eine entsprechende Verkleinerung des Totbereichs. Weiterhin kann der Pegel des Referenzsignals durch Eigenschaften von Referenzziel 70, Referenzlichtwellenleiter 72 und Y-Koppler 74 eingestellt werden.

Die Referenzmessungen liefern Informationen über das Sendesignal, das einer statistischen Schwankung unterliegt. Daher können sie auch bei der Störunterdrückung helfen, also der Unterscheidung von echten Objektdetektionen von Störeffekten. Beispielsweise wird anhand der erfassten Signalform des aktuellen Sendesignals und einer Historie der zuvor erfassten Empfangssignale das nächste Empfangssignal vorhergesagt. Bei genügender Ähnlichkeit ist das nächste Empfangssignal gültig. Eine starke Abweichung bedeutet entweder eine Störung oder dass ein neues Ziel angetastet wurde. Im letzteren Fall müssten dann die folgenden Empfangssignale untereinander ähnlich sein. Unterstützend kann die Entfernung und Reflektivität der in zeitlicher Nähe aufgenommenen Empfangssignale auf Plausibilität geprüft werden. Diese Art von Störunterdrückung ist besonders effektiv, wenn das einleitend genannte Pulsmittelungsverfahren verwendet wird, da hier Pulse mit einer vergleichsweise hohen Frequenz ausgesandt werden und deshalb Ziele regelmäßig mehrfach getroffen werden. Dies ist nur ein Beispiel für eine Filterung von Empfangssignalen anhand der aufgrund der Referenzmessung bekannten Eigenschaften des tatsächlichen Sendesignals, um eine Störunterdrückung zu implementieren.

Das Konzept der Auftrennung zwischen Optikmodul 12 und Elektronikmodul 14 kann besonders vorteilhaft dazu benutzt werden, mehrere Optikmodule 12 mit nur einem gemeinsamen Elektronikmodul 14 zu betreiben. Es entsteht ein Verbund aus "passiven Laserscannern" mit nur einer zentralen Elektronik. Dabei erlauben Lichtwellenleiter durchaus Entfernungen im Bereich mehrerer zehn Meter und darüber hinaus, so dass sich eine große Flexibilität bei der Einrichtung solcher Verbünde ergibt.

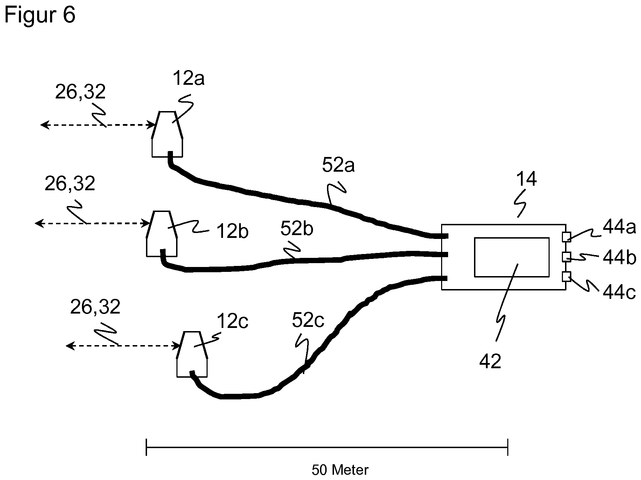

Figur 6 zeigt ein Beispiel für einen solchen Verbund mit drei Optikmodulen 12a-c und einem gemeinsamen Elektronikmodul 14. Das Elektronikmodul 14 ist für den Anschluss einer gewissen Anzahl Optikmodule 12a-c ausgelegt, indem Anschlüsse für Lichtwellenleiter 52a-c zur Verfügung gestellt werden, die jeweils mit einem Lichtsender und Lichtempfänger verbinden. Die Auswertungseinheit 42 ist mächtig genug, die Steuerungs- und Auswertungsaufgaben für die mehreren Kanäle parallel oder sequentiell auszuführen. Es stehen dann beispielsweise an drei Sicherheitsausgängen 44a-c die Freigabe- oder Abschaltsignale der drei Optikmodule 12a-c bereit. Das ist aber nur rein exemplarisch für praktisch beliebige Schnittstellen des gemeinsamen Elektronikmoduls 14.

Nicht nur die Anzahl mit drei angeschlossenen Optikmodulen 12a-c und entsprechenden Kanälen in dem Elektronikmodul 14 ist hier rein beispielhaft zu verstehen. Es sind homogene und heterogene Kombinationen mit allen bisher vorgestellten Ausführungsformen möglich, also insbesondere separate Sendelichtwellenleiter 16 und Empfangslichtwellenleiter 18, Versorgung mittels Solarzellen 56 oder Referenzmessungen durch optischen Teilkurzschluss und/oder optisches Referenzziel 70.

## Patentansprüche

1. Optoelektronischer Sensor (10), insbesondere Laserscanner, mit einem Lichtsender (20) zum Aussenden eines Abtaststrahls (26) in einen Überwachungsbereich (30), einem Lichtempfänger (38) zum Erzeugen eines Empfangssignals aus dem von Objekten in dem Überwachungsbereich (30) remittierten Abtaststrahl (32), einer beweglichen Ablenkeinheit (28) zur periodischen Ablenkung des Abtaststrahls (26, 32), um im Verlauf der Bewegung den Überwachungsbereich (30) abzutasten, einer Auswertungseinheit (42), die dafür ausgebildet ist, anhand des Empfangssignals Objekte in dem Überwachungsbereich (30) zu erfassen, und mit einem Sendelichtwellenleiter (16, 52), um den Abtaststrahl (26) von dem Lichtsender (20) zu der Ablenkeinheit (28), und einem Empfangslichtwellenleiter (18, 52), um den remittierten Abtaststrahl (32) von der Ablenkeinheit (28) zu dem Lichtempfänger (38) zu leiten, wobei der Sensor (10) ein Optikmodul (12) mit der beweglichen Ablenkeinheit (28) und ein davon separiertes Elektronikmodul (14) mit dem Lichtsender (20) und dem Lichtempfänger (38) sowie der Auswertungseinheit (42) aufweist, und der Sendelichtwellenleiter (16, 52) und der Empfangslichtwellenleiter (18) die beiden Module (12, 14) miteinander verbindet,
**dadurch gekennzeichnet,**
**dass** ein Referenzlichtwellenleiter (68, 72) zumindest einen Teil des Sendelichts als Referenzsignal dem Lichtempfänger (38) zuführt und die Auswertungseinheit (42) für eine Referenzmessung anhand des Referenzsignals ausgebildet ist, dass der Eintrittsbereich (70) des Referenzlichtwellenleiters (72) in dem Optikmodul (12) angeordnet ist und dass der Referenzlichtwellenleiter (72) in den Empfangslichtwellenleiter (18, 52) einkoppelt.

2. Sensor (10) nach Anspruch 1,
wobei das Optikmodul (12) einen Antrieb (40) für die Bewegung der Ablenkeinheit (28) sowie eine Sendeoptik (24), um den Abtaststrahl (26) aus dem Sendelichtwellenleiter (16, 52) in den Überwachungsbereich (30) auszusenden, und/oder eine Empfangsoptik (34) aufweist, um den remittierten Abtaststrahl (32) in den Empfangslichtwellenleiter (18, 52) einzukoppeln.

3. Sensor (10) nach Anspruch 1 oder 2,
wobei das Optikmodul (12) und/oder das Elektronikmodul (14) ein eigenes Gehäuse (46, 50) aufweist.

4. Sensor (10) nach einem der vorhergehenden Ansprüche,
wobei Optikmodul (12) und Elektronikmodul (14) voneinander räumlich getrennt sind.

5. Sensor (10) nach einem der vorhergehenden Ansprüche,
wobei Sendelichtwellenleiter (16, 52) und Empfangslichtwellenleiter (18, 52) von einem gemeinsamen Lichtwellenleiter (52) gebildet sind.

6. Sensor (10) nach einem der vorhergehenden Ansprüche,
wobei der Referenzlichtwellenleiter (68) als optischer Teilkurzschluss von Sende- und Empfangspfad zwischen Optikmodul (12) und Elektronikmodul (14) angeordnet ist.

7. Sensor (10) nach einem der vorhergehenden Ansprüche,
wobei der Eintrittsbereich (70) des Referenzlichtwellenleiters (72) in dem Optikmodul (12) in einem Austrittsbereich des Abtaststrahls (26) angeordnet ist.

8. Sensor (10) nach einem der vorhergehenden Ansprüche,
wobei die Auswertungseinheit (42) dafür ausgebildet ist, anhand des Referenzsignals eine Vorhersage für das Empfangssignal zu bestimmen und durch Vergleich zwischen Vorhersage und tatsächlichem Empfangssignal Störungen zu erkennen.

9. Sensor (10) nach einem der vorhergehenden Ansprüche,
wobei das Elektronikmodul (14) mehr als einen Lichtsender (20) und/oder Lichtempfänger (38) und mehrere Anschlüsse für Lichtwellenleiter (16, 18, 52) aufweist.

10. Sensor (10) nach Anspruch 9,
wobei die Auswertungseinheit (42) für eine parallele oder sequentielle Ansteuerung mehrerer Lichtsender (20) und Auswertung mehrerer Lichtempfänger (38) ausgebildet ist.

11. Sensor (10) nach Anspruch 9 oder 10,
wobei an das Elektronikmodul (14) mehrere Optikmodule (12a-c) über Lichtwellenleiter (16, 18, 52) angeschlossen sind.

12. Verfahren zum Erfassen von Objekten, bei dem ein Abtaststrahl (26) in einen Überwachungsbereich (30) ausgesandt, aus dem von Objekten in dem Überwachungsbereich (30) remittierten Abtaststrahl (32) ein Empfangssignal erzeugt und der Abtaststrahl (26, 32) mit einer beweglichen Ablenkeinheit (28) periodisch abgelenkt wird, um im Verlauf der Bewegung den Überwachungsbereich (30) abzutasten, und durch Auswertung des Empfangssignals Objekte in dem Überwachungsbereich (30) erfasst werden, wobei der Abtaststrahl (26) von einem Lichtsender (20) erzeugt wird, dessen Sendelicht über einen Sendelichtwellenleiter (16, 52) zu der Ablenkeinheit (28) geleitet wird, und wobei Empfangslicht des remittierten Abtaststrahls (32) von der Ablenkeinheit (28) über einen Empfangslichtwellenleiter (18, 52) zu einem Lichtempfänger (38) geleitet wird, wobei die periodische Ablenkung des Abtaststrahls (26, 32) zur Abtastung des Überwachungsbereichs (30) in einem Optikmodul (12) und die Erzeugung und Umwandlung des Lichts des Abtaststrahls (26, 32) in das Empfangssignal sowie die Auswertung des Empfangssignals in einem von dem Optikmodul (12) separierten Elektronikmodul (14) erfolgt, welches den Lichtsender (20) und den Lichtempfänger (38) sowie eine Auswertungseinheit (42) aufweist, wobei der Sendelichtwellenleiter (16, 52) und der Empfangslichtwellenleiter (18, 52) die beiden Module (12, 14) miteinander verbindet,
**dadurch gekennzeichnet,**
**dass** mit einem Referenzlichtwellenleiter (68, 72), dessen Eintrittsbereich in dem Optikmodul (12) angeordnet ist, zumindest ein Teil des Sendelichts aus dem Optikmodul (12) in den Empfangslichtwellenleiter (18, 52) eingekoppelt und so als Referenzsignal dem Lichtempfänger (38) zugeführt wird und dass die Auswertungseinheit eine Referenzmessung anhand des Referenzsignals vornimmt.

## Claims

1. An optoelectronic sensor (10), in particular a laser scanner, having a light transmitter (20) for transmitting a scanning beam (26) into a monitoring area (30), a light receiver (38) for generating a reception signal from the remitted scanning beam (32) remitted by objects in the monitoring area (30), a movable deflection unit (28) for periodically deflecting the scanning beam (26, 32) for scanning the monitoring area (30) in the course of the movement, an evaluation unit (42) configured to detect objects in the monitoring area (30) based on the reception signal, and a transmission optical waveguide (16, 52) for guiding the scanning beam (26) from the light transmitter (20) to the deflection unit (28) and a reception optical waveguide (18, 52) for guiding the remitted scanning beam (32) from the deflection unit (28) to the light receiver (38), wherein the sensor (10) comprises an optical module (12) having the movable deflection unit (28) and a separate electronic module (14) having the light transmitter (20) and the light receiver (38) as well as the evaluation unit (42), and wherein the transmission optical waveguide (16, 52) and the reception optical waveguide (18) interconnect the two modules (12, 14),
**characterized in that** a reference optical waveguide (68, 72) guides at least a portion of the transmission light to the light receiver (38) as a reference signal and the evaluation unit (42) is configured for a reference measurement based on the reference signal, **in that** the entry region (70) of the reference optical waveguide (72) is arranged in the optical module (12) and **in that** the reference optical waveguide (72) couples into the reception optical waveguide (18, 52).

2. The sensor (10) according to claim 1,
wherein the optical module (12) comprises a drive (40) for the movement of the deflection unit (28) as well as transmission optics (24) for transmitting the scanning beam (26) from the transmission optical waveguide (16, 52) into the monitoring area (30) and/or reception optics (34) for coupling the remitted scanning beam (32) into the reception optical waveguide (18, 52).

3. The sensor (10) according to claim 1 or 2,
wherein the optical module (12) and/or the electronic module (14) has its own housing (46, 50).

4. The sensor (10) according to one of the preceding claims,
wherein the optical module (12) and the electronic module (14) are spatially separated from one another.

5. The sensor (10) according to one of the preceding claims,
wherein the transmission optical waveguide (16, 52) and the reception optical waveguide (18, 52) are formed by a common waveguide (52).

6. The sensor (10) according to one of the preceding claims,
wherein the reference optical waveguide (68) is arranged between optical module (12) and electronic module (14) as a partial optical short-circuit from transmission path to reception path.

7. The sensor (10) according to one of the preceding claims,
wherein the entry region (70) of the reference optical waveguide (72) is arranged in the optical module (12) in an exit region of the scanning beam (26).

8. The sensor (10) according to one of the preceding claims,
wherein the evaluation unit (42) is configured to determine a prediction for the reception signal based on the reference signal and to detect interference by a comparison between prediction and actual reception signal.

9. The sensor (10) according to one of the preceding claims,
wherein the electronic module (14) has more than one light transmitter (20) and/or light receiver (38) and a plurality of connections for optical waveguides (16, 18, 52).

10. The sensor (10) according to claim 9,
wherein the evaluation unit (42) is configured for a parallel or sequential control of a plurality of light transmitters (20) and an evaluation of a plurality of light receivers (38).

11. The sensor (10) according to claim 9 or 10,
wherein a plurality of optical modules (12a-c) are connected to the electronic module (14) via optical waveguides (16, 18, 52).

12. A method for detecting objects, wherein a scanning beam (26) is transmitted into a monitoring area (30), a reception signal is generated from the remitted scanning beam (32) remitted by objects in the monitoring area (30) and the scanning beam (26, 32) is periodically deflected by a movable deflection unit (28) in order to scan the monitoring area (30) in the course of the movement, and by evaluation of the reception signal objects are detected in the monitoring area (30), wherein the scanning beam (26) is generated by a light transmitter (20) whose transmission light is guided to the deflection unit (28) via a transmission optical waveguide (16, 52) and wherein reception light of the remitted scanning beam (32) is guided from the deflection unit (28) to a light receiver (38) via a reception optical waveguide (18, 52), wherein the periodical deflection of the scanning beam (26, 23) for scanning the monitoring area (30) takes place in an optical module (12) and the generating of light and conversion into the reception signal of the scanning beam (26, 32) as well as the evaluation of the reception signal takes place in an electronic module (14) separate from the optical module (12) which comprises the light transmitter (20) and the light receiver (38) as well as an evaluation unit (42), wherein the transmission optical waveguide and the reception optical waveguide (18, 52) interconnect the two modules (12, 14),
**characterized in that**, by means of a reference optical waveguide (68, 72) whose entry region is arranged in the optical module (12), at least a portion of the transmission light is coupled from the optical module (12) into the reception optical waveguide (18, 52) and thus is guided to the light receiver (38) as a reference signal, and **in that** there is a reference measurement based on the reference signal in the evaluation unit.

## Revendications

1. Capteur optoélectronique (10), en particulier scanneur laser, comportant un émetteur de lumière (20) pour émettre un rayon de balayage (26) dans une zone à surveiller (30), un récepteur de lumière (38) pour générer un signal de réception à partir du rayon de balayage (32) réémis par des objets dans la zone à surveiller (30), une unité de déviation mobile (28) pour dévier périodiquement le rayon de balayage (26, 32) afin de balayer la zone à surveiller (30) au cours du mouvement, une unité d'évaluation (42) conçue pour détecter des objets dans la zone à surveiller (30) en se basant sur le signal de réception, et comportant un guide optique d'émission (16, 52) pour guider le rayon de balayage (26) depuis l'émetteur de lumière (20) jusqu'à l'unité de déviation (28), et un guide optique de réception (18, 52) pour guider le rayon de balayage (32) réémis depuis l'unité de déviation (28) jusqu'au récepteur de lumière (38), dans lequel le capteur (10) comprend un module optique (12) muni de l'unité de déviation mobile (28) et un module électronique (14) séparé de celui-ci et muni de l'émetteur de lumière (20) et du récepteur de lumière (38) ainsi que de l'unité d'évaluation (42), et le guide optique d'émission (16, 52) et le guide optique de réception (18) relient les deux modules (12, 14) l'un à l'autre,
**caractérisé en ce que**
un guide optique de référence (68, 72) amène au récepteur de lumière (38) une partie au moins de la lumière d'émission à titre de signal de référence, et l'unité d'évaluation (42) est réalisée pour effectuer une mesure de référence en se basant sur le signal de référence,
**en ce que** la zone d'entrée (70) du guide optique de référence (72) est agencée dans le module optique (12) et
le guide optique de référence (72) assure le couplage dans le guide optique de réception (18, 52).

2. Capteur (10) selon la revendication 1,
dans lequel le module optique (12) comprend un entraînement (40) pour le mouvement de l'unité de déviation (28) ainsi qu'une optique d'émission (24) pour émettre le rayon de balayage (26) depuis le guide optique d'émission (16, 52) jusque dans la zone à surveiller (30),
et/ou une optique de réception (34) pour coupler le rayon de balayage réémis (32) dans le guide optique de réception (18, 52).

3. Capteur (10) selon la revendication 1 ou 2,
dans lequel le module optique (12) et/ou le module électronique (14) comporte(nt) un propre boîtier (46, 50).

4. Capteur (10) selon l'une des revendications précédentes,
dans lequel le module optique (12) et le module électronique (14) sont séparés dans l'espace l'un de l'autre.

5. Capteur (10) selon l'une des revendications précédentes,
dans lequel le guide optique d'émission (16, 52) et le guide optique de réception (18, 52) sont formés par un guide optique commun (52).

6. Capteur (10) selon l'une des revendications précédentes,
dans lequel le guide optique de référence (68) est agencé à titre de court-circuit partiel optique du chemin d'émission et de réception entre le module optique (12) et le module électronique (14).

7. Capteur (10) selon l'une des revendications précédentes,
dans lequel la zone d'entrée (70) du guide optique de référence (72) dans le module optique (12) est agencée dans une zone de sortie du rayon de balayage (26).

8. Capteur (10) selon l'une des revendications précédentes,
dans lequel l'unité d'évaluation (42) est réalisée pour faire une prévision quant au signal de réception, en se basant sur le signal de référence, et pour reconnaître des perturbations par comparaison entre la prévision et le signal de réception réel.

9. Capteur (10) selon l'une des revendications précédentes,
dans lequel le module électronique (14) comprend plus d'un émetteur de lumière (20) et/ou plus d'un récepteur de lumière (38) et plusieurs raccords pour des guides optiques (16, 18, 52).

10. Capteur (10) selon la revendication 9,
dans lequel l'unité d'évaluation (42) est réalisée pour un pilotage parallèle ou séquentiel de plusieurs émetteurs de lumière (20) et pour une évaluation de plusieurs récepteurs de lumière (38).

11. Capteur (10) selon la revendication 9 ou 10,
dans lequel plusieurs modules optiques (12a - c) sont raccordés au module électronique (14) par des guides optiques (16, 18, 52).

12. Procédé de détection d'objets, dans lequel on émet un rayon de balayage (26) dans une zone à surveiller (30), on génère un signal de réception à partir du rayon de balayage (32) réémis par les objets dans la zone à surveiller (30), et on fait dévier périodiquement le rayon de balayage (26, 32) au moyen d'une unité de déviation mobile (28) afin de balayer la zone à surveiller (30) au cours du mouvement, et on détecte des objets dans la zone à surveiller (30) par évaluation du signal de réception, dans lequel le rayon de balayage (26) est généré par un émetteur de lumière (20) dont la lumière d'émission est amenée jusqu'à l'unité de déviation (28) par un guide optique d'émission (16, 52), et la lumière de réception du rayon de balayage (32) réémis est amenée depuis l'unité d'évaluation (28) jusqu'à un récepteur de lumière (38) par un guide optique de réception (18, 52), la déviation périodique du rayon de balayage (26, 32) destinée à balayer la zone à surveiller (30) s'effectue dans un module optique (12) et la génération et la conversion de la lumière du rayon de balayage (26, 32) en le signal de réception ainsi que l'évaluation du signal de réception s'effectue dans un module électronique (14) séparé du module optique (12), qui comprend l'émetteur de lumière (20) et le récepteur de lumière (38) ainsi qu'une unité d'évaluation (42), le guide optique d'émission (16, 52) et le guide optique de réception (18, 52) relient les deux modules (12, 14) l'un à l'autre,
**caractérisé en ce que**
une partie au moins de la lumière d'émission est couplée depuis le module optique (12) dans le guide optique de réception (18, 52) par un guide optique de référence (68, 72) dont la zone d'entrée est agencée dans le module optique (12), et elle est ainsi amenée à titre de signal de référence jusqu'au récepteur de lumière (38), et **en ce que** l'unité d'évaluation effectue une mesure de référence en se basant sur le signal de référence.
